Europäisches Patentamt

(19) European Patent Office

Office européen des brevets

(11) EP 0 559 796 B1

## (12) EUROPEAN PATENT SPECIFICATION

(45) Date of publication and mention
of the grant of the patent:
**14.08.1996 Bulletin 1996/33**

(21) Application number: **92901822.4**

(22) Date of filing: **19.11.1991**

(51) Int. Cl.$^6$: **B29C 35/08**, B32B 27/00,
C08J 5/18, C09J 5/06,
C08K 11/00

(86) International application number:
**PCT/US91/08655**

(87) International publication number:
**WO 92/09414 (11.06.1992 Gazette 1992/13)**

(54) **RADIO FREQUENCY HEATING OF THERMOPLASTIC RECEPTOR COMPOSITIONS**

ERWÄRMUNG VON THERMOPLASTISCHEN REZEPTORZUSAMMENSETZUNGEN MITTELS
HOCHFREQUENZ

CHAUFFAGE HAUTE FREQUENCE DE COMPOSITIONS DE RECEPTEURS
THERMOPLASTIQUES

(84) Designated Contracting States:
**DE**

(30) Priority: **28.11.1990 US 619084**

(43) Date of publication of application:
**15.09.1993 Bulletin 1993/37**

(73) Proprietor: **H.B. FULLER LICENSING &
FINANCING, INC.
Wilmington, Delaware 19890 (US)**

(72) Inventor: **SATO, Norman, J.
Maple Grove, MN 55369 (US)**

(74) Representative: **Maiwald, Walter, Dr. Dipl.-Chem.
et al
Maiwald & Partner,
Postfach 15 13 09
80048 München (DE)**

(56) References cited:
FR-A- 2 248 311          GB-A- 988 414
US-A- 4 253 898          US-A- 4 423 191

• WORLD PATENTS INDEX LATEST Derwent
Publications Ltd., London, GB; AN 86-207420 &
JP,A,61 138 683

EP 0 559 796 B1

## Description

### Field of the Invention

The invention generally relates to methods for applying thermoplastic compositions. More specifically, the present invention relates to methods for the applying of thermoplastic compositions through heating by the application of electromagnetic radiation having a frequency in the radio spectrum. These thermoplastics comprise novel receptors which upon activation generate heat. The methods of the present invention are useful in the creation of adhesive bonds, films, fiber resin composite suitable for many applications in various industries including general adhesive applications in the automobile industry, the aerospace industry and the like.

### Background of the Invention

One of the first applications of using radio waves to produce heat was in the area of medical diathermy or the heating of muscle and skin tissue by radio waves. Radio waves were used in this context for the treatment of arthritis at the beginning of the century. In the adhesives industry, the first radio frequency cure application with water based adhesives dates back to the late 1930's in the lumber industry. At this time, boards were being pressed with steam heated platens into plywood sheets. Veneers were being hot pressed into curved shapes with hand tool metal molds. Switching to radio frequency heating equipment saved money, time, energy and materials, by eliminating the steam platens. This new technology was immediately accepted by the wood working industry.

The rapid radio frequency cure of plywood was invaluable during World War II. Examples of applications for radio frequency cured water based adhesives in plywood products include items such as the P.T. boat and the British mosquito bomber airplanes. The radio frequency cure industry continued to grow rapidly in the 1950's. The wood and lumber industries converted more and more to radio frequency. Plastic welders, heat sealers and resin heaters to dry and relieve physical stresses in thermoplastics were developed. Rubber vulcanizing systems and compression molding techniques for the tire industry were also developed.

A representative sample of the present state of the art includes Haven et al, U.S. Patent No. 4,423,191, which teaches the applying of thermoplastic resins such as polyurethanes, phenolics, polyesters, and epoxies through the use of dielectrically lossy particles to which an electric field having a frequency ranging from 1 MHz to 30 GHz is applied.

Wilkinson et al, U.S. Patent No. 4,941,936, disclose a process for using dielectric heating in the manufacture of reinforced plastic automotive body parts. Thorsrud et al, U.S. Patent No. 4,360,607, discloses a sensitizing concentrate generally comprising four constituents including (1) polymeric alkylene glycols and their mono-and di-alkyl ethers, (2) alcohol amines and their hydrocarbyl substituted derivatives, and optionally, (3) silica, and (4) a "plastomer", i.e., an elastomer such as a butadiene-styrene copolymeric rubber. Thorsrud, U.S. Patent Nos. 4,661,299, 4,767,799 and 4,790,965, also disclose compositions intended to enhance the radio frequency sensitivity of moldable compositions such as zinc oxide, bentonite clay, and crystalline or amorphous alkali or alkaline earth metal aluminsilicate. Further, Thorsrud, U.S. Patent No. 4,840,758, discloses a method for preparing molded thermoplastic articles including the steps of admixing a radio frequency energy sensitizing agent, namely, N-ethyl toluene sulfonamide into a thermoplastic polymer to provide a mixture having moldable consistency.

Pham et al, U.S. Patent No. 4,853,420, discloses polymers which are readily susceptible to high frequency radiation, from about 0.1 to about 30,000 MHz as a means of heating these thermoplastic polymers to a pliable consistency. Beckert et al, U.S. Patent No. 4,296,294, disclose a mechanism for drying aqueous based adhesives based on varying the energy in a radio frequency field to effectively promote the evaporation of water from the adhesive used in bookbindings. Schonfeld et al, U.S. Patent No. 4,083,901, disclose a process for applying polyurethane elastomers.

Toa Gosei Chem Ind. Ltd., Japanese Patent No. 2,086,672, discloses an adhesive complex comprising polypropylene which optionally may contain an ethylene-propylene copolymer, an alpha, beta ethylenically unsaturated carboxylic acid or its anhydride, a radical initiator, and fine metallic particles. Maeda et al, U.K. Patent Application 2,200,128A, discloses a polyphenylene oxide resin composition suitable for high temperature dielectric applications. Gauvin et al, "Forging and R-F Assisted Processing of UHMW Polyethylene, Two Alternatives for Shorter Cycles and High Performance", compares radio frequency assisted processing and forging processing of thermoplastic compositions.

FR-A-2 248 311 discloses crosslinking sealant compositions comprising a thermosetting material and particles of a non conductor preferably chosen from titanates, zirconates and stannates of Mg, Ca, Sr and Pb. The crosslinking is achieved through the application of a high frequency wavelength to the composition. This prior art document neither discloses nor suggests the use of receptors as employed in the methods of the present invention.

Radio frequency has been applied to various other adhesives with little or no commercial success. Urethanes, resin composites, epoxies, dental acrylics, and epoxy adhesives, were all subjected to experimentation of radio frequency cure. Moreover, polyesters, silicons, polyolefins generally, polystyrene, rigid polyvinylchloride, acrylics, polycarbonates, urethanes, generally epoxies, fiberglass, are among those compounds that are not sensitive to radio frequency energy.

The use of radio frequency to cure solely the adhesive composition generally failed due to a lack of appropriate equipment as well as an absence of appropriate electrical and chemical properties in the materials to be applied.

## Summary of the Invention

The present invention provides processes which may be used to melt, apply or form thermoplastic compositions on demand at a substantial savings in costs. The methods of the present invention provide for the heat application of thermoplastic compositions within the localized volume where an effective concentration the radio frequency receptor is located. As a result, not only is unnecessary heating of the surrounding environment avoided, but moreover, flammable substrates as well as resins may be left substantially unaffected by processing. The methods of the present invention reduce heat distortion, warpage, or "read through" on the substrates of application. The bond line is the sole situs of heat and not the substrate. Rather the substrate acts as a heat sink.

The system of the present invention places a RF applicable composition between a source of RF energy and a conductive surface. The RF energy passes from the source through the RF applicable composition to the conductive surface. The RF source can be an antenna or plate, conductive substrates or other RF source. The conductive, receiving surface may be an antenna or plate, conductive substrate or any other effective RF receptor. The present invention allows application of thermoplastic compositions on demand at a lower cost in materials as well as power consumption. The composition used in the present invention is capable of applying or forming thermoplastic compositions having a higher melting point than the melting point or heat distortion temperature of the substrate to which they are applied due to the localized activation of the thermoplastic through the radio frequency receptor. Moreover, methods and compositions of the present invention provide a means of applying thermoplastic compositions regardless of the thickness or the polarity of the substrates.

The present invention resides in part in the use of a thermoplastic receptor for radio signals having a frequency of 1 to 100 MHz. The receptor used according to this invention has a dissipation factor of 0.1 or greater. Methods of applying thermoplastic compositions through the application of radio signals having a frequency of 1 to 100 MHz to compositions having a receptor where the substrate of application can be used to transmit the activating energy to the receptor laden composition.

## Brief Description of the Drawings

FIGURE 1 is a schematic representation of a modified Hartley circuit.

FIGURE 2 is one embodiment of the method of the present invention depicting the application of radio frequency waves in a direction parallel to the receptor laden resin.

FIGURE 3 is an alternative embodiment of the method of the present invention depicting application of radio frequency waves in a direction perpendicular to the orientation of the receptor laden resin.

FIGURE 4 is a further alternative embodiment of the method of the present invention depicting the application of radio frequency waves to the receptor laden resin through stray field waves.

FIGURES 5-7 depict various alternative embodiments of the application of radio frequency waves to the receptor laden resin stemming principally from the embodiment shown in Fig. 2.

## Detailed Description of the Invention

The present invention comprises methods of applying thermoplastic compositions using a radio frequency receptor.

## Receptors

Generally, the receptors used in the present invention function to absorb radio waves transmitted through a receptor laden heat applicable thermoplastic composition. By absorbing the radio waves, the receptors, in turn, transform radio energy into heat energy which melts and promotes application of the thermoplastic compositions. Previously, radio frequency work has focused on the dielectric constant of various receptor compositions. However, I have found that in the relationship of dielectric constant, loss tangent, and dielectric loss factor, both loss tangent and dielectric loss factor have a significant impact on the system. Dielectric constant is related to loss tangent and dielectric loss factor by the following equation:

$$\text{Dielectric Loss Factor} = \text{Dielectric Constant} \times \text{Dissipation Factor}$$

The dielectric constant is a measure of the energy storage capability of the material. The Dissipation Factor is the ratio of the energy dissipation (or loss) capability of the material to its energy storage capability. In previous instances, the primary focus has been upon dielectric constant, i.e., the ability of the material to accept and store charge. However, important to a receptor composition is the ability of that composition to not only absorb and store charge but to also dissipate that charge or lose that charge to the surrounding material.

This dissipation factor or dielectric loss factor is a measure of the ability of the receptor to dissipate energy in the form of heat to the surrounding material. Reliance solely upon dielectric constant may result in a receptor which will store energy continually without any resulting dissipation.

Generally, compositions useful as receptors in accordance with the present invention include those which have a dissipation factor of at least 0.1 or greater when exposed to radio waves of a frequency of from 1 MHz to 100 MHz. Moreover, the compositions in accordance with the present invention which will most preferably serve as receptors should have a dissipation factor ranging from 0.1 to over 100, preferably from 0.1 to 50, and most preferably from 0.1 to 5. Receptors of the present invention may also have a dielectric constant ranging from 0.1 to over 2000.

Examples of receptors which have been found useful in accordance with the present invention are believed to work by way of one of two of the following mechanisms. First, useful receptors ("kinetic receptors") have been found to work through a kinetic mechanism where the addition of a higher concentration of receptor within the thermoplastic composition results in an increased amount of heat towards that level desired in the specific application.

Receptors useful in the present invention have also been found to work in a complementary manner with the activating radio frequency plate or antenna. Specifically, the more plate or antenna area to which the "complementary receptor" treated composition is exposed, the lower the concentration of receptor necessary to create the amount of desired heat. In contrast, the lesser area of antenna or plate available to activate the receptor treated composition, the higher the concentration of receptor necessary to treat and create the desired heat given a fixed distance between plates. In this capacitive relationship, the amount of energy exposed to the receptor treated composition inversely determines the concentration of receptor necessary within the composition itself.

Generally, any composition which has a dielectric constant, dissipation factor and is capable of absorbing radio waves at the frequencies detailed above may be used in accordance with the present invention. Compositions which have been found to be most useful in accordance with the present invention include compounds both with and without bound molecular water.

Those compounds having bound molecular water include alkali and alkaline earth metal sulfate salts and aluminum trihydrate. Sulfate salts such as calcium sulfate are believed to work through a kinetic mechanism where the concentration of the calcium sulfate is varied based on the amount of heat desired and the composition of use. Generally, the composition of calcium sulfate ranges from 0.1 wt-% to 40 wt-%, preferably from 0.1 wt-% to 10 wt-% and most preferably from 0.1 wt-% to 6 wt-%.

Turning to aluminum trihydrate, this receptor is also believed to also work through kinetic action wherein the concentration may be varied depending upon the amount of heat to be delivered to the resulting composition. Specifically, the concentration of aluminum trihydrate may vary broadly from 1.0 wt-% to 60 wt-%, preferably 8 wt-% to 12 wt-%, and is most preferably 10 wt-%.

Receptors useful in the present invention may also comprise those without bound molecular water such as polystyrene sulfonate sodium salt, quaternary ammonium salts, as well as phosphonate compounds and phosphate compounds.

The concentration of polystyrene sulfonate sodium salt may be varied depending on the area of the receptor laden substance exposed to the antenna or radio frequency generating plate. Generally, the concentration of polystyrene sulfonate sodium salt may vary from 0.1 to 20 wt-%, preferably from 0.3 to 4 wt-% and most preferably from 0.5 to 2 wt-%.

Other compounds also useful as receptors in accordance with the present invention are phosphate and phosphonate compounds. Generally, phosphate compounds useful in the present invention are those having a large enough dipole character to be receptive to the given frequency of radio waves introduced into the system. Phosphate compounds which may adequately work as receptors include tricresyl phosphate, tributyl phosphate, propylated triphenyl phosphate, and tri ($\beta,\beta$ dichloro isopropyl) phosphate among others.

Moreover, any phosphonate compound having a phosphate-oxygen bond with enough dipole character to be receptive to the frequency of energy introduced into the system may be useful in accordance with the present invention. Phosphonate compounds which have been found useful in accordance with the present invention include dimethyl methyl phosphonate, trichloropropyl phosphonate, diethyl 2-hydroxy ethyl amino phosphonate, and the like. Generally, the concentration of these compounds will range from 0.1 wt-% to 25 wt-%, preferably from 0.5 wt-% to 10 wt-% and most preferably from 1 wt-% to 7 wt-%.

Receptors used in the present invention may also comprise any quaternary ammonium salt having the chemical and electrical properties previously outlined. Generally, those quaternary ammonium salts which are though to be most useful are those of the general formula $CH_3CH_2N(CH_3)_2R$ wherein R is a $C_{10}$ to $C_{24}$ branched or linear alkyl. In especially preferred quaternary salt is CA100 available from Aceto Chemical Co. of New York. The concentration of the quaternary ammonium salts generally ranges from about 0.1 to 15 wt-%, preferably from 0.3 to 10 wt-% and most preferably from 0.5 to 1.5 wt-%.

While the quaternary ammonium salts are generally soluble in the resin, it is often desirable to use a plasticizer to make the salts soluble. In these instances, a plasticizer may generally be added at the rate of up to 8 parts plasticizer for every 2 parts quaternary ammonium salt wherein the concentration of quaternary ammonium salt is within the ranges detailed above. Useful plasticizer compositions include any composition which will effectively solubilize the quaternary ammonium salt within the given resin such as phosphates and phosphonates, polyols such as 1,4-butanediol, dioctyl phthalate ethylene glycol, and propylene glycol are all examples of compositions which may be useful in solubilizing quaternary ammonium salt receptors used in the present invention.

Thermoplastic Compositions

Thermoplastic compositions that may be used with the receptors used in the present invention include vinyl polymers, polyesters, polyamides, polyimides, polyamide-imides, polyethers, block polyamides-polyethers, block polyesters-polyethers, polycarbonates, polysulfones, poly bis-imidazoles, polybisoxazoles, poly bis-thiazoles, and polyphenyl polymers. Other useful thermoplastics include nylons, polyacetals, polyester elastomers, polyurethanes, polyphenyl-aniline sulfides, polypropylenes, polyether ether ketones, as well as elastomeric thermoplastics including butyl rubber, ethylene vinyl acetate copolymers, as well as SOS, SBS and SIS block copolymers and the like. Especially preferred are polycarbonates, and polyolefins such as polypropylene, as well as polyimides.

Vinyl polymers useful in the present invention, include polyethylene, polypropylene; rubbery polymers and copolymers prepared from monomers including ethylene, propylene, styrene, acrylonitrile, butadiene, isoprene, and others, acrylic acid, methacrylic acid, methylacrylate, methylmethacrylate, vinyl acetate, hydroxy methacrylate, hydroxy ethylacrylate, as well as other known vinyl monomers.

Also useful as thermoplastics with the receptors used in the present invention include thermoplastic saturated polyesters made from di- or tri- carboxylic acid in combination with di- or tri- hydroxy compounds.

**Composites**

The receptor compositions used in the present invention may also be used in composites generally comprising the thermoplastic compositions outlined above and insoluble filler or fiber compositions. Generally, the composite may comprise at least one fiber and a thermoplastic. Fiber components can be monofilament, multifilament fibers, yarns, woven, nonwoven, and unidirectional composite fibers. Generally, composite fibers that can be used in combination with thermoplastics and the receptor used in the present invention to create a unitary object through processes known to those of skill in the art including glass fibers, carbon fibers, or graphite fibers. Also useful are polyester mats, glass mats, carbon mats and graphite mats which may be woven or nonwoven as is intended for any given application.

Generally, these composite articles may be manufactured by any means known to those of skill in the art and in the fabrication of a composite, the concentration of the composite fiber will range from 0.1 wt-% to 99 wt-%, preferably from 5 wt-% to 40 wt-% and most preferably from 10 wt-% to 20 wt-%.

**Application of Radio Frequency Energy**

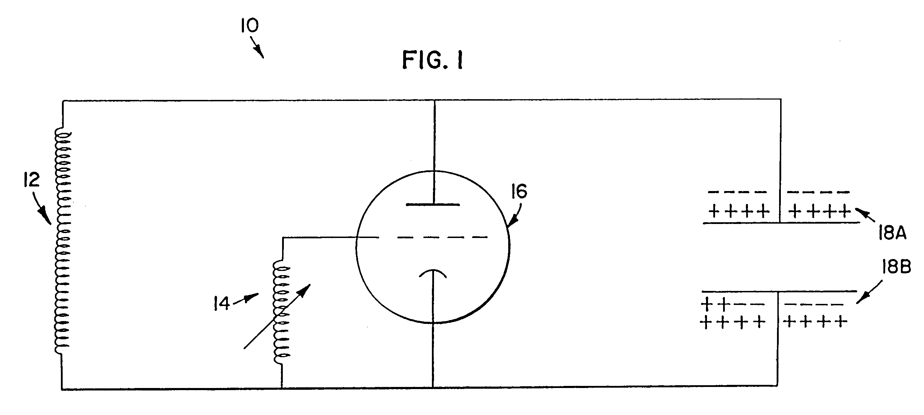

Generally, the receptors used in the present invention may be activated by any device capable of directing electromagnetic energy having a frequency ranging from 1 megahertz to 100 megahertz (MHz) into the receptor containing thermoplastic. Radio waves within this frequency may be generated through a modified Hartley circuit 10, Fig. 1. A modified Hartley circuit 10 may generally comprise a frequency coil 12, tuning coil 14, oscillatory tube 16 and two opposing plates 18A and 18B. In use, the sample is generally positioned between these two plates, 18A and 18B, and the energy passes through the sample from plate to opposing plate.

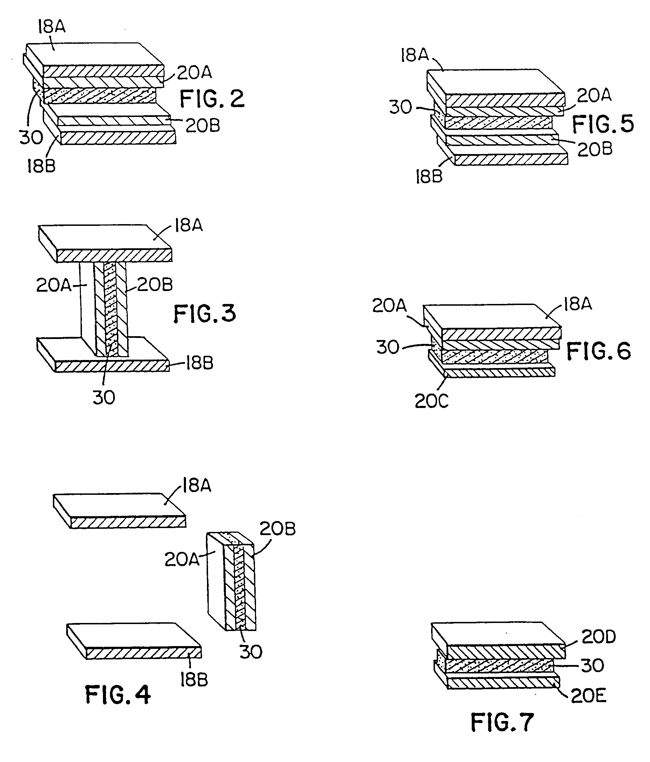

While a modified Hartley circuit 10 is possibly the most simple and well known circuit used for the creation of radio waves having the given frequency of 1 MHz to about 100 MHz, any other device capable of producing radio waves of this frequency may also be used in accordance with the present invention. Generally, the receptors within a given thermoplastic resin may be activated by positioning the receptor containing resin 30 between two substrates 20A and 20B which are in turn positioned between the two opposing plates or electrodes 18A and 18B, see Fig. 2. In noncomposite applications, the resin 30 may be laid on the substrate of application, which in turn may be positioned with the largest dimension of the adhesive 30 parallel to the opposing plates 18A and 18B, Fig. 2.

The resin containing substrates 20A and 20B may also be positioned between and perpendicular to the opposing plates 18A and 18B, Fig. 3. The substrates 20A and 20B may also be positioned outside of the space between the opposing plates so as to be activated by radio waves which stray beyond the field created between the two plates, Fig. 4. This last application of energy is called stray field activation. In composite applications these three schemes are equally applicable to compositions held in molds by varying the position of the molds accordingly.

When the resin is placed within the field between the two opposing plates, various combinations of plates and substrates may be used in activating the receptors and, in turn, heating and melting the thermoplastic compositions of the present invention, see Figs. 5-7.

For example, as previously defined, the most simple means of activating receptors in accordance with the present invention is the use of a modified Hartley circuit 10 having conductive opposing plates. If the receptor laden thermoplastic 30 is to be used as an adhesive, two opposing substrates 20A and 20B having the receptor laden resin 30 in between them may be inserted between the opposing plates 18A and 18B, Fig. 5. The plates 18A and 18B, being conductive, act to effectively transmit energy waves through the substrates 20A and 20B, activating the receptor. The adhesive 30 is heated and melted, ultimately bonding the two substrates 20A and 20B.

The present invention also provides for the use of a single conductive substrate or two conductive substrates to be used instead of the plates, Figs. 6 and 7. In these two instances, the opposing conductive plates are either partially or completely obviated. For example, it is possible to use a conductive plate 18A in combination with two substrates 20A and 20C wherein substrate 20C is conductive. The opposing lead for the radio frequency applying system is merely attached to the conductive substrate 20C so that energy will flow from the charged plate through the receptor laden thermoplastic composition to the conductive substrate 20C. Substrate 20C may be made conductive through the application of embedded metal foils, fibers or particles. Conductive particles may also be applied by aerosol or pump spray. Alternatively, an inherently conductive substrate may be used such as a metal or metal alloy.

This design or method of applying radio frequency energy towards heating and melting thermoplastic compositions is applicable in situations where a two plate system is not practical due to constraints created by logistic, space, etc. considerations which prevent the inclusion of two opposing conductive plates. Such applications are often found in the automotive, aerospace, and marine industries. An opposing lead is merely attached to the substrate in which the receptor laden thermoplastic composition is to be applied so as to provide a proper alternating lead or plate so that the radio frequency energy will actually pass through the receptor laden thermoplastic composition which is laid against the first opposing conductive plate.

The present invention also allows for the application for radio frequency energy to compositions which comprise two conductive substrates, Fig. 7. Here again, the substrates 20D and 20E may be the intended surfaces of application, such as in the case of a film or adhesive. Alternatively, the substrates may be a mold for the production of a composite article. For example, if an adhesive application is intended, two opposing substrates 20D and 20E may be bonded to each other using those substrates as the conductive plates which would normally emit and receive the radio frequency energy. In this instance, the receptor laden thermoplastic 30 may be generally applied to one of the substrates in the intended position. The other substrate is then placed approximately adjacent to this lower substrate in its intended position. Leads are then attached to the respective substrates 20D and 20E and energy is transmitted through the receptor laden thermoplastic composition 30. The substrates may be made conductive or may be inherently conductive as noted earlier. Composites may be similarly formed by using electrically conductive molds.

The use of such conductive substrates may be found applicable in any number of industries including those which require metal to metal bonding or metal to dielectric bonding, where the dielectric is something such as wood, plastic, paper and the like. Such industries include the aerospace, marine, and automotive industry in applications such as bumper bonding and molding, carpet bonding, and headlamp molding; the aeronautical industry in applications such as the assembly and manufacture of interior and exterior components.

Generally, the receptors used in the present invention may be activated by a frequency ranging from 1 to 100 MHz, preferably from 3 to 80 MHz, and most preferably from 3 to 35 MHz. The most preferred frequency for operation of the receptors of the present invention is about 27.12 MHz. An additional advantage of the present invention is the ability to activate receptors without the use of high voltage electricity. Specifically, voltages ranging from 100 to 500,000, preferably from 1000 to 100,000, and most preferably from 1000 to 50,000 may be used to activate the receptors used in the present invention. Generally, the spacing of the radio wave generating plates ranges from 0,0025 - 50,8 cm (0.001 inch to 20) inches, preferably 0,013 - 30,5 cm (0.005 inch to 12 inches), and most preferably from 0,07 - 15,2 cm (0.030 inch to 6 inches). In use, the radio waves are generated from the circuitry with an amperage ranging from 0.05 amp to 5 amps, preferably from 0.1 amp to 1 amp, and most preferably from 0.2 amp to 0.4 amp.

Generally, once receptors are loaded into the thermoplastic compositions of choice, the thermoplastic may be activated instantaneously merely by the application of energy having the correct frequency to activate that composition. The actual time of activation will depend upon the required heat to melt the adhesive as well as the design of the plates used to provide the radio waves and the volume of thermoplastic composition to be applied. Generally, the time of application will range from 0.01 to 60 minutes, preferably from 0.1 to 15 minutes, and most preferably from 0.1 to 6 minutes.

While a modified Hartley circuit may be used to complete the processes of the present inveniton, an especially preferred machine is a Workrite 300 made by Workrite Co. of Berkley, California. I have found that this machine is especially applicable to stray field applications providing 1000 volts and 300 watts.

### Applications

The methods of the present invention may be used to cure a variety of thermoplastic compositions which may be used in any number of applications including the use as films, adhesives or in the manufacture of unitary composite articles. The methods can be used for the production of plastic bonds, plastic to metal bonds, metal to metal bonds, wood to metal or plastic, and the like. The methods of the present invention may also be used for paper to paper, metal, and plastic for bonding of parts in the aerospace, aircraft, marine, furniture, automotive, rail, appliance, construction, packaging, and general assembly markets.

Plastic substrates which may be adhered to by film coating or adhesion include polycarbonate substrates, acrylic substrates, polyvinyl chloride substrates, ABS substrates, polyolefins such as polypropylene substrates, polyethylene substrates, phenolic substrates, polyamide substrates, polyimide substrates, epoxy substrates, polysulfide and polysulfone substrates, polyester substrates, polyurethane substrates, and the like. Other substrates which the receptor laden thermoplastic compositions of the present invention may be used on include paper, wood, styrene, butadiene substrates, expanded polystyrene, nylon, fiberglass reinforced plastics including SMC and BMC and the like. By films, it is intended that the receptor laden thermoplastic composition of the present invention may cast as free standing films or sealants which are readily adhered to a substrate, as well as other types of functional or aesthetic coating applications. These plastics may be coated or, in fact, bonded for the fabrication of parts used in any number of industries including the aerospace and aircraft industries, marine and recreational products industries, as well as the automotive, rail and truck industries.

Non-plastic substrates to which the receptor laden thermoplastic compositions may be applied include glass, wood, and metals such as aluminum, copper and copper alloys including brass, lead, stainless steel, tin, paper, galvanized steel, as well as plastic, metal alloys or thermoplastic elastomers, olefins, or polyesters.

### Working Examples

The following examples illustrate the preparation of receptor containing thermoplastic compositions in accorance with the present invention. These working examples should be viewed as illustrative and not as limiting of the present invention.

### Working Example I

Various phosphate receptors were tested for radio frequency activity in a stray environment. Specifically, 185 to 195 milliamps of radio frequency energy at a frequency of 27.12 MHz was applied and the temperature change was measured over the given period of time. Below you will find the working examples segregated into Examples 1A through 1K.

Example 1A:  3 gm Pentaerythritol/No heat rise.
Example 1B:  3 gm of Calcium Carbonate/No response.
Example 1C:  2.5 grams of Tri (Beta Chloropropyl) Phosphate.

| Temp. Change | Time |
|---|---|
| RT - 106,7°C (224°F) | 1 min 55 sec |

Example 1D:  Tributyl phosphate.

| Temp. Change | Time |
|---|---|
| RT - 37,8°C (100°F) | 120 sec. |

Example 1E:   Tri (Beta, Beta Dichloro isopropyl) Phosphate

| Temp. Change | Time |
|---|---|
| RT - 66,1°C (151°F) | 19 sec |
| RT - 66,1°C (151°F) | 18 sec |
| RT - 106,9°C (224.4°F) | 49 sec |

Example 1F:   Propylated triphenyl phosphate

| Temp. Change | Time |
|---|---|
| RT - 66,1°C (151°F) | 29 sec |
| RT - 106,9°C (224.4°F) | 181 sec |

Example 1G:   Butylated triphenyl phosphate

| Temp. Change | Time |
|---|---|
| RT - 66,1°C (151°F) | 55 sec |
| RT - 106,7°C (224°F) | 92 sec |
| RT - 66,1°C (151°F) | 31 sec |
| RT - 106,7°C (224°F) | 107 sec |

Example 1H:   Tri cresyl Phosphate.

| Temp. Change | Time |
|---|---|
| RT - 66,1°C (151°F) | 29 sec |
| RT - 106,7°C (224°F) | 82 sec |
| RT - 66,1°C (151°F) | 28 sec |
| RT - 106,7°C (224°F) | 92 sec |

Example 1I:    Dimethyl Methyl Phosphonate.

| Temp. Change | Time |
|---|---|
| RT - 66,1°C (151°F) | 22 sec |
| RT - 106,7°C (224°F) | 26 sec |
| RT - 66,1°C (151°F) | 21 sec |
| RT - 106,7°C (224°F) | 29 sec |

Example 1J:    Diether N,N-Bis (2-hydroxy ethyl) amino methyl phosphonate.

| Temp. Change | Time |
|---|---|
| RT - 66,1°C (151°F) | 3 sec |
| RT - 94,4°C (202°F) | 6 sec |

Example 1K:    Tri (Beta Chloro Ethyl) Phosphate.

| Temp. Change | Time |
|---|---|
| RT - 66,1°C (151°F) | 59 sec |
| RT - 106,7°C (224°F) | 102 sec |

**Working Example II**

A receptor composition comprising 20% solid quarternary salt and 80% dimethyl methyl phosphonate was then formulated in a 250 milliliter beaker by introducing a quarternary salt first and then adding the dimethyl methyl phosphate with a stirrer at 65,6°C (150°F). Once this composition was dissolved it was cooled and placed in a glass jar. The composition was then tested for RF sensitivity by applying 215 milliamps through a stray field to the composition for 0 to 5 seconds. As can be seen below, the temperature change over that time period for each of five samples range as high as 178,3°C (353°F) from the initial room temperature for each of the five samples.

| | Wt-% | Grams |
|---|---|---|
| 1. CA-100 | 20 | 8.1 $CH_3CH_2N(CH_3)_2(C_{12-14}$ alkyl) |
| 2. DMMP | 80 | 32.4 Dimethyl methyl phosphonate |
| | $\overline{100}$ | $\overline{40.5}$ |

| Example | Temp. Change | Time |
|---------|--------------|------|
| 2A | RT - 106,9°C (224.4°F) | 3 sec |
| 2B | RT - 148,5°C (299.3°F) | 2.4 sec |
| 2C | RT - 178,5°C (353.3°F) | 1.7 sec |
| 2D | RT - 178,4°C (353.1°F) | 4.1 sec |
| 2E | RT - 178,4°C (353.1°F) | 2.6 sec |

**Working Example III**

Testing was then undertaken to determine the sensitivity of certain RF receptors. The first composition was formulated by mixing 20 wt-% quarternary ammonium salt ($CH_3CH_{2N}(CH_3)_2(C_{12-14}$ alkyl)Cl) and 80 wt-% 1, 4 butanediol. When a 2.5 gram sample of this mixture was subjected to 215 milliamps of RF frequency at 27.12 Mghz, the sample increased in temperature from room temperature to 66,1°C (151°F) in 6.4 seconds. A second sample was subjected to 295 milliamps at 27.12 Mghz and after 23 seconds, the temperature increased from room temperature to 122,2°C (252°F).

**Working Example IV**

A second mixture of 20 wt-% of quarternary ammonium salt ($CH_3CH_{2N}(CH_3)_2(C_{12-14}$ alkyl)Cl) and 80% 1,4 butanediol were mixed. 2.5 gram samples were then subjected to an RF energy at varying milliamp ranges and 27.12 MHz frequency. At times ranging from 5 seconds to 20 seconds, the samples increased in temperature from room temperature to 164,4°C (328°F). The receptor compositions of Working Example X seemed to generate less heat than those of Working Example XI.

**Wording Example V**

A control receptor composition was prepared by mixing 1 gram of polycarbonate granules with 3 grams of Frequon C-20, (a control sulfonamide receptor available from Struktol Inc. of Ohio) until the polycarbonate was thoroughly wet out. A 100 milliliter polyethylene plastic cup was then inverted and 2-3 grams of the composition was placed on the base of the cup. The composition was then heated with RF energy using a stray field system at 27.12 MHz. After two minutes at 205 milliamps the polycarbonate began to fuse. After three minutes a hole resulted in the bottom of the polyethylene cup at which time the experiment was ended.

**Working Example VI**

Another sample of the material prepared in Example V was placed in a 20 milliliter glass pyrex beaker. The beaker was precoated with a mold release compound commonly used in the production of composites RF energy was then applied to the beaker under the same conditions of Working Example I. It was difficult to get good application of RF energy due to the shape of the beaker. After five minutes the composition began to melt and flow.

**Working Example VII**

Using the same material as prepared in Working Example V, additional material was placed on a fiberglass mat which was in turn placed on an inverted 100 milliliter cup. Applying RF energy to the system under the same conditions as in Working Example I, the polycarbonate melted in three minutes.

**Working Example VIII**

To ascertain the RF sensitivity of the quaternary cationics of the present invention, 2.1875 grams of polycarbonate granules are combined with 0.3125 grams of catufur PP50 ($CH_3CH_2N^+$ $(CH_3)_2RCl^-$ wherein R equals $C_{12-14}$ - 20%; 80% 1,4-butane diol) were mixed under ambient conditions until the polycarbonate granules were completely wet out. A plastic cup similar to that used in Working Example V was inverted and 2 to 3 grams of the mixture was applied to the inverted cup. RF energy was then applied to the composition under the conditions set forth in Working Example I. After 14 seconds the composition has melted and fused to the upper surface of the inverted cup.

## Working Example IX

A comparison was then undertaken using a bismaleamide resin (MDAB/5292B from Mobax Chemical). In this instance, the resin was placed in a 500 milliliter polyethylene cup having a 24 ounce glass placed over the top of it. RF energy was then applied under the same conditions as that used in Example V. The bismaleamide resin showed a very slight heating response and melted over time.

## Working Example X

The same resin used in Working Example IX was then heated under RF conditions. It took five minutes to heat the material (2 grams) from room temperature to 122,5°C (252.5°F). at 185 - 190 milliamps with no sensitizers added. The heating was completed in a 100 milliliter polyethylene cup. These results show that the material is lossy enough to respond slightly to radio frequency energy.

## Working Example XI

A 50 gram batch of the bismaleamide-receptor resin is then prepared using the resin of Working Example IX at 95% and the receptor shown in Working Example IV at 5%. Under its conditions shown in Example VI, the bismaleamide resin is melted using a receptor and RF energy.

## Working Example XII

A receptor composition was then formulated by mixing 38.2 grams of quaternary ammonium salt (40 wt-%) with 57.3 grams of m-pyrol (60 wt-%). The receptor composition was mixed by adding the m-pyrol to a 250 milliliter Erlenmeyer flask and then adding the quaternary ammonium salt ($CH_3CH_2N^+ (CH_3)_2RCl^-$ wherein R equals $C_{12-14}$ alkyl) and heating the composition to 65,6°C (150°F). until dissolved. Six Working Examples were then prepared.

Working Example XIIA comprised a sandwich of two layers of clear polycarbonate (Lexon LS111 from Standard Plaques), between which was placed two radiation resistant thermoplastic polyamide sheets known within the trade as Kapton sheets. These Kapton sheets were each 15 millimeters thick. Between the Kapton sheets was a polyimide known as Techimer 2001 (available from Fiber Resins, Inc.).

Working Example XIIB comprised a sandwich of two clear polycarbonate layers only.

Working Example XIIC comprised a control of two Kapton sheets without the Techimer 2001 polyimide adhesive.

Working Example XIID comprised the Techimer 2001 polyimide adhesive placed between two Kapton sheets.

Working Example XIIE comprised a dried film of Techimer 2001 without the Kapton sheets placed between the polycarbonate.

Working Example XIIF comprised polyimide adhesive mixed with 2% of the receptor composition previously formulated. This composition was then introduced between two Kapton sheets which were then held between two polycarbonate lenses.

In each instance, melting powders were placed in Working Example XIIA, B, C, E and F. Applying RF energy to the compositions at 70 MHz, under parallel plate conditions, none of Working Examples XIIA - E resulted in a bond between the Kapton sheets when these sheets were present. Only Working Example XIIF resulted in a bonding of the Kapton sheets.

## Claims

1. A method of applying a thermoplastic composition by applying radio signals having a frequency of 1 to 100 MHz to a composition comprising a major portion of thermoplastic and a receptor, said receptor having a dissipation factor of 0.1 or greater and a dielectric constant of at least 0.1 or greater, said receptor selected from the group consisting of alkali or alkaline earth metal sulfate salts, aluminum trihydrate, quaternary ammonium salts, phosphonate compounds, phosphate compounds, polystyrene sulfonate sodium salts, or mixtures thereof, said method comprising the steps of:

   (a) applying said composition to a substrate;
   (b) applying radio signals to the composition deposited on the substrate; and
   (c) dissipating the radio signals received by the receptor as thermal energy in an amount effective to form the composition to a thermoplastic bond.

2. The method of claim 1 additionally comprising the step of applying a second substrate on top of the heat curable composition prior to the application of radio signals to the composition.

3. The method of claim 1 wherein said substrate comprises wood, metal, glass, plastic, or paper.

4. The method of claim 2 wherein said first or second substrates comprise a composition selected from the group consisting of wood, metal, glass, plastic or paper.

5. The method of claim 1 wherein said radio signals are applied to said heat composition for a period of time ranging from 1 minute to 60 minutes.

6. The method of claim 1 wherein said radio waves are applied to the composition through a conductive substrate.

7. The method of claim 2 wherein said first and second substrates are conductive and said radio waves are applied directly to the composition through said conductive substrates.

8. A method of applying a thermoplastic composition by applying radio signals having a frequency of 3 to 35 MHz at a voltage ranging from 1000 to 50,000 volts and an average current ranging from 0.05 amps to 5 amps to a composition comprising a major portio of thermoplastic and a receptor, said receptor having a dissipation factor of 0.1 or greater and dielectric constant of at least 0.1 or greater, said receptor selected from the group consisting of alkali or alkaline earth metal sulfate salts, aluminum trihydrate, quaternary ammonium salts, phosphonate compounds, phosphate compounds, polystyrene sulfonate sodium salts, or mixtures thereof, said method comprising the steps of:

(a) applying said composition to a substrate;
(b) placing the substrate between two plates and applying radio signals to the composition deposited on the substrate; and
(c) dissipating the radio signals received by the receptor as thermal energy in an amount effective to form said composition to a thermoplastic bond.

9. The method of claim 8 wherein said substrate comprises wood, metal, glass, plastic, or paper.

10. The method of claim 8 wherein said first or second substrates comprise a composition selected from the group consisting of wood, metal, glass, plastic or paper.

11. The method of claim 8 wherein said radio signals are applied to said heat curable composition for a period of time ranging from 0.1 minute to 60 minutes.

12. The method of claim 8 wherein said radio waves are applied to the composition through a conductive substrate.

13. The method of claim 8 wherein said first and second substrate are conductive and said radio waves are applied directly to the composition through said conductive substrates.

**Patentansprüche**

1. Ein Verfahren zum Aufbringen einer thermoplastischen Zusammensetzung durch die Anwendung von Radiosignalen mit einer Frequenz von 1 bis 100 MHz auf eine Zusammensetzung, bestehend aus einem Hauptanteil aus thermoplastischem Kunststoff und einem Rezeptor, wobei dieser Rezeptor einen Verlustfaktor von 0,1 oder größer und eine Dielektrizitätskonstante von mindestens 0,1 oder größer besitzt und dieser Rezeptor aus der Gruppe, bestehend aus Alkali- oder alkalischen Erdmetallsulfatsalzen, Aluminiumtrihydrat, quartären Ammoniumsalzen, Phosphonatverbindungen, Phosphatverbindungen, Polystyrolsulfonatnatriumsalzen, oder Gemischen davon, gewählt wird, und wobei das Verfahren die folgenden Schritte umfaßt:

(a) Aufbringen dieser Zusammensetzung auf ein Substrat;
(b) Anwendung von Radiosignalen auf die auf dem Substrat abgelagerte Zusammensetzung; und
(c) Ausbreitung der von dem Rezeptor empfangenen Radiosignale als thermische Energie in einer Menge, die wirksam ist, um die Zusammensetzung zu einem thermoplastischen Band auszuformen.

2. Das Verfahren gemäß Anspruch 1, das zusätzlich den Schritt des Aufbringens eines zweiten Substrats auf die Oberseite der durch Wärme aushärtbaren Zusammensetzung vor der Anwendung von Radiosignalen auf die Zusammensetzung beinhaltet.

3. Das Verfahren gemäß Anspruch 1, bei dem dieses Substrat aus Holz, Metall, Glas, Kunststoff oder Papier besteht.

4. Das Verfahren gemäß Anspruch 2, bei dem diese ersten oder zweiten Substrate aus einer Zusammensetzung bestehen, die aus der Gruppe, bestehend aus Holz, Metall, Glas, Kunststoff oder Papier, gewählt wird.

5. Das Verfahren gemäß Anspruch 1, bei dem diese Radiosignale für einen Zeitraum von 1 Minute bis 60 Minuten auf diese durch Wärme aushärtbare Zusammensetzung angewandt werden.

6. Das Verfahren gemäß Anspruch 1, bei dem diese Radiowellen durch ein leitfähiges Substrat an die Zusammensetzung gebracht werden.

7. Das Verfahren gemäß Anspruch 2, bei dem diese ersten und zweiten Substrate leitfähig sind und diese Radiowellen direkt durch diese leitfähigen Substrate an die Zusammensetzung gebracht werden.

8. Ein Verfahren zum Aufbringen einer thermoplastischen Zusammensetzung durch Anwendung von Radiosignalen mit einer Frequenz von 3 bis 35 MHz mit einer Spannung zwischen 1.000 und 50.000 Volt und einer mittleren Stromstärke zwischen 0,05 Ampere bis 5 Ampere auf eine Zusammensetzung, bestehend aus einem Hauptanteil von thermoplastischem Kunststoff und einem Rezeptor, wobei dieser Rezeptor einen Verlustfaktor von 0,1 oder größer und eine Dielektrizitätskonstante von mindestens 0,1 oder größer besitzt und dieser Rezeptor aus der Gruppe, bestehend aus Alkali- oder alkalischen Erdmetallsulfatsalzen, Aluminiumtrihydrat, quartären Ammoniumsalzen, Phosphonatverbindungen, Phosphatverbindungen, Polystyrolsulfonatnatriumsalzen, oder Gemischen davon, gewählt wird, wobei dieses Verfahren die Schritte umfaßt:

(a) Aufbringen dieser Zusammensetzung auf ein Substrat;
(b) Anbringen des Substrats zwischen zwei Platten und Anwendung von Radiosignalen auf die auf dem Substrat abgelagerte Zusammensetzung; und
(c) Ausbreitung der durch den Rezeptor empfangenen Radiosignale als thermische Energie in einer Menge, die wirksam ist, um diese Zusammensetzung zu einem thermoplastischen Band auszuformen.

9. Das Verfahren gemäß Anspruch 8, bei dem dieses Substrat aus Holz, Metall, Glas, Kunststoff oder Papier besteht.

10. Das Verfahren gemäß Anspruch 8, bei dem diese ersten und zweiten Substrate aus einer Zusammensetzung bestehen, die aus der Gruppe, bestehend aus Holz, Metall, Glas, Kunststoff oder Papier, gewählt wird.

11. Das Verfahren gemäß Anspruch 8, bei dem diese Radiosignale über einen Zeitraum von 0,1 Minute bis 60 Minuten auf diese wärmeaushärtbare Zusammensetzung angewandt werden.

12. Das Verfahren gemäß Anspruch 8, bei dem diese Radiowellen durch ein leitfähiges Substrat an die Zusammensetzung gebracht werden.

13. Das Verfahren gemäß Anspruch 8, bei dem diese ersten und zweiten Substrate leitfähig sind und diese Radiowellen direkt durch diese leitfähigen Substrate an die Zusammensetzung gebracht werden.

**Revendications**

1. Procédé d'application d'une composition thermoplastique en appliquant des signaux radioélectriques ayant une fréquence de 1 à 100 MHz à une composition comprenant une majeure partie de thermoplastique et un récepteur, ledit récepteur ayant un facteur de dissipation de 0,1 ou plus et une constante diélectrique d'au moins 0,1 ou plus, ledit récepteur étant sélectionné à partir du groupe constitué par des alcalis ou des sels de sulfate de métaux alcalino-terreux, du trihydrate d'aluminium, des sels d'ammonium quaternaire, des composés de phosphonate, des composés de phosphate, des sels de sodium de sulfonate de polystyrène, ou des mélanges de ces derniers, ledit procédé comprenant les étapes suivantes :

(a) l'application de ladite composition à un substrat ;
(b) l'application de signaux radioélectriques à la composition déposée sur le substrat ; et

(c) la dissipation des signaux radioélectriques reçus par le récepteur en tant qu'énergie thermique en une quantité efficace pour former la composition en une liaison thermoplastique.

2. Procédé selon la revendication 1 comprenant, de plus, l'étape d'application d'un second substrat sur le dessus de la composition pouvant être cuite à la chaleur avant l'application de signaux radioélectriques à la composition.

3. Procédé selon la revendication 1, dans lequel ledit substrat est composé de bois, de métal, de verre, de plastique ou de papier.

4. Procédé selon la revendication 2, dans lequel lesdits premier ou second substrats sont constitués par une composition sélectionnée à partir du groupe constitué de bois, de métal, de verre, de plastique ou de papier.

5. Procédé selon la revendication 1, dans lequel lesdits signaux radioélectriques sont appliqués à ladite composition pouvant être cuite à la chaleur pendant une période de temps comprise entre 1 minute et 60 minutes.

6. Procédé selon la revendication 1, dans lequel lesdites ondes radioélectriques sont appliquées à la composition par l'intermédiaire d'un substrat conducteur.

7. Procédé selon la revendication 2, dans lequel lesdits premier et second substrats sont conducteurs et dans lequel lesdites ondes radioélectriques sont directement appliquées à la composition par l'intermédiaire desdits substrats conducteurs.

8. Procédé d'application d'une composition thermoplastique en appliquant des signaux radioélectriques ayant une fréquence de 3 à 35 MHz à une tension comprise entre 1.000 et 50.000 volts et un courant moyen compris entre 0,05 A et 5 A à une composition comprenant une majeure partie de thermoplastique et un récepteur, ledit récepteur ayant un facteur de dissipation de 0,1 ou plus et une constante diélectrique d'au moins 0,1 ou plus, ledit récepteur étant sélectionné à partir du groupe constitué par des alcalis ou des sels de sulfate de métaux alcalino-terreux, du trihydrate d'aluminium, des sels d'ammonium quaternaire, des composés de phosphonate, des composés de phosphate, des sels de sodium de sulfonate de polystyrène, ou des mélanges de ces derniers, ledit procédé comprenant les étapes suivantes :

   (a) l'application de ladite composition à un substrat ;
   (b) le placement du substrat entre deux plaques et l'application de signaux radioélectriques à la composition déposée sur le substrat ; et
   (c) la dissipation des signaux radioélectriques reçus par le récepteur en tant qu'énergie thermique en une quantité efficace pour former ladite composition en une liaison thermoplastique.

9. Procédé selon la revendication 8, dans lequel ledit substrat est composé de bois, de métal, de verre, de plastique ou de papier.

10. Procédé selon la revendication 8, dans lequel lesdits premier ou second substrats sont constitués par une composition sélectionnée à partir du groupe constitué de bois, de métal, de verre, de plastique ou de papier.

11. Procédé selon la revendication 8, dans lequel lesdits signaux radioélectriques sont appliqués à ladite composition pouvant être cuite à la chaleur pendant une période de temps comprise entre 0,1 minute et 60 minutes.

12. Procédé selon la revendication 8, dans lequel lesdites ondes radioélectriques sont appliquées à la composition par l'intermédiaire d'un substrat conducteur.

13. Procédé selon la revendication 8, dans lequel lesdits premier et second substrats sont conducteurs et dans lequel lesdites ondes radioélectriques sont directement appliquées à la composition par l'intermédiaire desdits substrats conducteurs.

FIG. I

10

12

14

16

18A

18B

FIG. 2

FIG.5

FIG.3

FIG.6

FIG.4

FIG.7